# EUROPÄISCHE PATENTSCHRIFT

(11) **EP 2 670 617 B1**
(45) Veröffentlichungstag und Bekanntmachung des Hinweises auf die Patenterteilung: **13.05.2020**
(21) Anmeldenummer: 11782564.6
(22) Anmeldetag: 15.11.2011
(51) Int. Cl.: B60L 3/04, B60L 3/00, B60R 16/03

(54) **VERFAHREN UND VORRICHTUNG ZUR STEUERUNG DER STROMVERSORGUNG IN EINEM STROMNETZ EINES KRAFTWAGENS, SOWIE KRAFTWAGEN**
METHOD AND DEVICE FOR CONTROLLING THE POWER SUPPLY IN AN ELECTRICAL SYSTEM OF A MOTOR VEHICLE, AS WELL AS A MOTOR VEHICLE
PROCÉDÉ ET DISPOSITIF POUR COMMANDER L'ALIMENTATION DANS UN RÉSEAU ÉLECTRIQUE D'UN VÉHICULE AUTOMOBILE ET VÉHICULE AUTOMOBILE

(30) Priorität: 03.02.2011 DE 102011010230
(43) Veröffentlichungstag der Anmeldung: 11.12.2013
(73) Patentinhaber: Audi AG, 85045 Ingolstadt (DE)
(72) Erfinder: WEISS, Christian, 85113 Böhmfeld (DE)
(74) Vertreter: Herbst, Matthias Heinz
(86) Internationale Anmeldenummer: PCT/EP2011/005741
(87) Internationale Veröffentlichungsnummer: WO 2012/103906

(56) Entgegenhaltungen:
- EP-A2- 1 839 985
- DE-A1- 4 323 604
- DE-A1-102007 025 144
- US-A1- 2007 026 711

## Beschreibung

Die Erfindung betrifft ein Verfahren zum Steuern der Stromversorgung in einem Stromnetz eines Kraftwagens. Die Erfindung betrifft auch eine Vorrichtung zur Steuerung der Stromversorgung in einem Stromnetz eines Kraftwagens mit einem Umfeldsensor und einer Beurteilungsvorrichtung. Schließlich betrifft die Erfindung auch einen Kraftwagen mit einer solchen Vorrichtung.

In der Fahrzeugtechnik ist der Einsatz von Hochvoltbatterien bekannt, die in einem Elektro- oder Hybridfahrzeug den für den Antrieb eines Elektromotors benötigten Strom bereitstellen. Elektromotor und Traktionsbatterie sind dann an einem fahrzeuginternen Stromnetz angeschlossen, in dem hohe Spannungen und Ströme auftreten können. Die hohen Energiedichten der Traktionsbatterie können ein erhebliches Risiko bei Unfällen darstellen. Deshalb werden in der Regel batterieinterne Zustände überwacht und die Batterie wird im Falle eines schwerwiegenden Fehlers vom Hochspannungsnetz getrennt.

Weiterhin ist es bekannt, Umfeldsensoren zu nutzen, um im Falle eines bevorstehenden Unfalls die Aktivierung von Sicherheitseinrichtungen (Airbags, Gurtstraffer etc.) vorzubereiten und zu beschleunigen. Solche Umfeldsensoren können zum Beispiel in einem Spurwechselassistenten (SWA), einer automatischen Geschwindigkeitsregelung (ACC) oder aber als eigenständige Sicherheitssensoren bereitgestellt werden.

Weiterhin sind Fahrzeuge mit Sensoren (Raddrehzahlsensoren, Lenkwinkelsensoren, Low-g-Beschleunigungssensoren) ausgestattet, die die Fahrdynamik überwachen und regeln (z.B. Fahrdynamikreglung [ESP], Antiblockiersystem [ABS], Antischlupfreglung [ASR]). Daneben können sogenannte Crashsensoren (z.B. Beschleunigungssensoren, Drücksensoren, Drehratensensoren) im Fahrzeug vorgesehen sein, um einen Aufprall oder Überschlag des Fahrzeugs zu detektieren. Auf Grundlage dieser Daten kann eine Traktionsbatterie im Kraftwagen aus Sicherheitsgründen vom fahrzeuginternen Netz abgetrennt werden (z.B. DE 10 2009 039 913 A1 und DE 43 05 819 A1). Der Abtrennvorgang kann hierbei mechanisch, elektrisch oder pyrotechnisch (z.B. DE 694 02 926 T2) erfolgen.

Die DE 10 2007 025 144 A1 beschreibt eine Sicherheitsvorrichtung für ein Kraftfahrzeug. Um die Insassensicherheit zu erhöhen, ist eine Sensorvorrichtung zur Erkennung einer drohenden Gefahrensituation so ausgelegt, dass der Energiefluss mittels einer Steuervorrichtung bereits im Falle einer drohenden Gefahrensituation abschaltbar ist.

Aus der US 5,389,824 ist eine Vorrichtung zur Unterbrechung der Stromzufuhr für eine Traktionsbatterie bekannt. Ob eine Unterbrechung erfolgt oder nicht, wird von einer Diagnoseeinheit in Abhängigkeit von Kollisionssensorsignalen und/oder Abstandssensorsignalen entschieden.

Auch aus der US 5,577,569 ist bekannt, dass die Stromzufuhr von der Batterie eines Elektroautos in Abhängigkeit von der Beurteilung einer Kollisionsgefahr automatisch unterbrochen werden kann. Die Beurteilung erfolgt hierbei unter Zuhilfenahme von Geschwindigkeits- und Abstandswerten gegenüber einem Objekt.

Die Druckschrift EP 1 839 985 A2 wird als nächstliegender Stand der Technik angesehen und offenbart die Merkmale aus dem Oberbegriff des Anspruchs 1.

Es ist Aufgabe der Erfindung, im Falle einer Kollision oder drohenden Kollision die Stromversorgung im Stromnetz des Kraftwagens bedarfsgerecht an die Kollisionssituation anzupassen und den sicheren Betrieb des Fahrzeugs zu gewährleisten.

Diese Aufgabe wird durch ein Verfahren, welches die Merkmale des Patentanspruchs 1 aufweist, eine Vorrichtung, welche die Merkmale des Patentanspruchs 7 aufweist sowie einen Kraftwagen mit den Merkmalen des Patentanspruchs 8 gelöst.

Das erfindungsgemäße Verfahren dient zum Steuern der Stromversorgung durch eine Strombereitstellungsvorrichtung in einem Stromnetz eines Kraftwagens und umfasst die folgenden Schritte:
a) Erfassen von Daten betreffend das Umfeld des Kraftwagens mittels zumindest eines Umfeldsensors;
b) Beurteilen eines potentiellen Zusammenstoßes des Kraftwagens mit einem Objekt im Umfeld des Kraftwagens auf Basis der von dem zumindest einen Umfeldsensor erfassten Daten durch Auswahl einer Bewertung aus zumindest zwei festlegbaren Bewertungen, wobei die zumindest zwei festlegbaren Bewertungen einen Zusammenstoß des Kraftwagens mit einem Objekt charakterisieren; und
c) in Abhängigkeit von der ausgewählten Bewertung, Steuern der Stromversorgung in dem Stromnetz des Kraftwagens gemäß einer festlegbaren Steuervorgabe, wobei jeder der zumindest zwei festlegbaren Bewertungen eine spezifische Steuervorgabe zugeordnet ist, wobei der zumindest eine Umfeldsensor Bewegungs-, Positions- und Typinformationen von anderen Verkehrsteilnehmern liefern kann, das Verfahren eine Anpassung der Steuerung der Stromversorgung an die Schwere des Unfalls erlaubt, die zumindest zwei festlegbaren Bewertungen den Zusammenstoß des Kraftwagens mit dem Objekt hinsichtlich des Einflusses des Zusammenstoßes auf die Strombereitstellungsvorrichtung charakterisieren, eine erste Bewertung ausgewählt wird, falls bei einem hinsichtlich des Einflusses des Zusammenstoßes auf die Strombereitstellungsvorrichtung leichten Auffahrunfall zwischen dem Kraftwagen und dem Objekt der Zusammenstoß als unkritisch bewertet wird, wobei die erste Bewertung einer ersten Steuervorgabe zugeordnet ist, eine zweite Bewertung ausgewählt wird, falls bei einem hinsichtlich des Einflusses des Zusammenstoßes auf die Strombereitstellungsvorrichtung schwerwiegenden Unfall zwischen dem Kraftwagen und dem Objekt der Zusammenstoß als sehr kritisch bewertet wird, wobei die zweite Bewertung einer zweiten der Steuervorgaben zugeordnet ist, die erste der Steuervorgaben vorgibt, dass eine reversible Unterbrechung der Stromversorgung erfolgt, wobei für die reversible Unterbrechung in einer Strombereitstellungsvorrichtung vorhandene interne Schütze reversibel geöffnet werden, sodass von der Strombereitstellungsvorrichtung nach außen hin kein Strom bereitgestellt wird und die irreversible Unterbrechung durch eine pyrotechnische Trennung einer Stromleitung realisiert wird, sodass von der Strombereitstellungsvorrichtung nach außen hin kein Strom bereitgestellt wird, durch die zumindest zwei Bewertungen eine Wahrscheinlichkeit, ein Verlauf und eine Schwere des potentiellen Zusammenstoßes des Kraftwagens mit dem Objekt und ein voraussichtlicher Auftreffzeitpunkt des Objekts auf den Kraftwagen und eine potentielle Deformation des Kraftwagens und die zu erwartenden Belastungen auf die elektrischen Bauteile beurteilt werden, wobei bei reversibler Unterbrechung der Stromversorgung die Managementvorrichtung der Strombereitstellungsvorrichtung einem Fahrzeugführer erlaubt, die internen Schütze wieder zu schließen und selbsttätig die Strombereitstellungsvorrichtung zu aktivieren und bei irreversibler Unterbrechung der Stromversorgung die Managementvorrichtung der Strombereitstellungsvorrichtung gewährleistet, dass durch Eingabe eines Codes nur Fachpersonal die Strombereitstellungsvorrichtung in einen aktiven Zustand überführen kann.

Im Schritt des Erfassens von Daten können insbesondere solche Daten erfasst werden, die ein Objekt im Umfeld des Kraftwagens betreffen, z.B. ein Abstand, eine relative Geschwindigkeit, eine Bewegungstrajektorie oder einen Winkel des Objekts zum Kraftwagen. In Schritt b) wird beurteilt, ob ein Zusammenstoß des Kraftwagens mit dem Objekt droht und, falls ein solcher Zusammenstoß droht, mit welcher Wahrscheinlichkeit er eintritt. Zudem wird die Qualität des Zusammenstoßes beurteilt, d.h. es wird der zu erwartende Verlauf des Zusammenstoßes bzw. Unfalls vorhergesagt, abgeschätzt und bewertet. Hierbei steht eine Mehrzahl von vorher festlegbaren Bewertungen zur Verfügung, welche verschiedenen Unfallsszenarien zugeordnet sind. Jeder dieser Bewertungen wird dann eine spezifische Steuervorgabe zugeordnet, die festlegt, wie die Stromversorgung des Kraftwagens gesteuert wird. Insbesondere kann vorgesehen sein, dass je nach Bewertung einzelne Stromquellen, Verbraucher oder Stromnetzabschnitte vom Stromnetz genommen werden bzw. nicht mehr mit Strom versorgt werden.

Das Verfahren gewährleistet eine abgestufte Beurteilung eines potentiellen Unfallverlaufs und basierend hierauf eine sehr differenzierte Steuerung der Stromversorgung in dem Stromnetz des Kraftwagens. Die Stromversorgung kann sehr bedarfsgerecht auf den zu erwartenden Unfallverlauf abgestimmt werden. Das Stromnetz kann auf einen zu erwartenden Unfall vorbereitet werden, so dass einzelne Komponenten entladen bzw. nicht mehr stromführend sind, während gegebenenfalls in anderen Teilbereichen des Stromnetzes die Energieversorgung während des Unfalls (z.B. für die Ansteuerung von elektrischen Insassen-Rückhaltesystemen) und auch nach dem Unfall noch sichergestellt ist.

Vorzugsweise gibt zumindest eine der Steuervorgaben vor, auf welche Art die Stromversorgung in dem Stromnetz zumindest teilweise unterbrochen wird. Die Stromversorgung kann dadurch unterbrochen werden, dass eine Traktionsbatterie vom Stromnetz genommen bzw. deaktiviert wird. Insbesondere kann vorgesehen sein, dass die gesamte Stromversorgung in dem Stromnetz abgeschaltet wird, so dass die meisten, in einem normalen Betriebszustand des Kraftwagens stromführenden Teile während oder nach dem Unfall stromlos sind. Nach dem Unfall kann der Kraftwagen gegebenenfalls schwer beschädigt sein. Insbesondere bei einem Hochvoltnetz bestehen dann hohe Gefahren (z.B. Brandgefahr), die sich durch das frühzeitige Unterbrechen der Stromversorgung vermeiden lassen. Andererseits kann bei einem nur leichten Unfall sichergestellt werden, dass die Stromversorgung und damit die Fahrtüchtigkeit des Kraftwagens erhalten bleibt. Je nach Unfallschwere kann die Stromversorgung also sehr differenziert den zu erwartenden Folgen angepasst werden.

Erfindungsgemäß ist es hierbei, wenn eine erste der Steuervorgaben vorgibt, dass eine reversible Unterbrechung der Stromversorgung erfolgt, und eine zweite der Steuervorgaben vorgibt, dass eine im Rahmen der Kraftfahrzeugsteuerung irreversible Unterbrechung der Stromversorgung erfolgt. Unter irreversibler Unterbrechung ist zu verstehen, dass die Unterbrechung von einem gewöhnlich geschulten Fahrzeugführer nicht ohne erheblichen Aufwand rückgängig gemacht werden kann. Nach einer irreversiblen Unterbrechung muss der Kraftwagen gewöhnlich im Rahmen von Reparaturarbeiten von Fachleuten wieder instand gesetzt werden. Eine irreversible Unterbrechung kann z.B. durch eine pyrotechnische Trennung einer Stromleitung oder über eine Steuerelektronik realisiert werden. Diese Ausführungsform erlaubt eine sehr gute Anpassung der Steuerung der Stromversorgung an die Schwere eines Unfalls. Erfindungsgemäß ist vorgesehen, dass bei einem als unkritisch bewerteten Zusammenstoß die reversible Unterbrechung erfolgt, während bei einem als sehr kritisch beurteilten Zusammenstoß aus Sicherheitsgründen eine irreversible Unterbrechung erfolgt. Auf diese Art werden sowohl ein zuverlässiger Betrieb des Kraftwagens als auch ein hohes Maß an Sicherheit gewährleistet.

Vorzugsweise gibt zumindest eine der Steuervorgaben vor, auf welche Art eine für die Stromversorgung in dem Stromnetz vorgesehene Strombereitstellungsvorrichtung, insbesondere eine Traktionsbatterie und/oder ein Kondensator und/oder ein Generator, betrieben oder angeschlossen wird. Es kann vorgesehen sein, dass gemäß der Steuervorgabe die Traktionsbatterie angeschaltet bleibt oder reversibel bzw. irreversibel abgeschaltet wird. Es kann vorgesehen sein, dass ein geladener Kondensator vom Netz abgetrennt wird oder kontrolliert entladen wird. Um sicher zu sein, dass ein Generator während des Unfallverlaufs oder nach dem Unfall nicht noch weiter Strom in das Netz einspeist, kann er frühzeitig vom Netz getrennt werden. Je nach Art des zu erwartenden Unfalls kann sehr differenziert reagiert werden, indem auf eine, mehrere oder alle in dem Stromnetz vorhandenen Strombereitstellungsvorrichtungen steuernd eingewirkt wird. Für verschiedene Unfallsszenarien können verschiedene Abschaltszenarien der Strombereitstellungsvorrichtungen vorgesehen sein.

Durch die zumindest zwei Bewertungen werden erfindungsgemäß verschiedene, für den Unfallverlauf erhebliche Faktoren beurteilt. Ein solcher Faktor ist die Schwere des potentiellen Zusammenstoßes des Kraftwagens mit dem Objekt sein, die insbesondere in verschiedene Stufen eingeteilt werden kann. Unter Vorhersage des Aufprallbereichs und/oder Aufprallwinkels und/oder der Relativgeschwindigkeit zwischen Kraftwagen und Objekt wird der detaillierte Unfallverlauf prognostiziert und einer geeigneten Bewertung zugeordnet. Schließlich wird auch die potentielle Deformation des Kraftwagens durch die Bewertung beurteilt. Damit stehen geeignete Kriterien für eine dem Unfallverlauf angepasste Steuerung der Stromversorgung bereit.

Vorzugsweise umfasst das Verfahren auch den Schritt, dass Daten betreffend einen Fahrzustand des Kraftwagens mittels eines Fahrzustandssensors und/oder Daten betreffend einen Zusammenstoß des Kraftwagens mit einem Objekt mittels eines Aufprallsensors erfasst werden. Neben den Daten des Umfeldsensors stehen dann ergänzend Daten weiterer Sensoren zur Verfügung. Dann kann der Schritt des Beurteilens insbesondere zusätzlich unter Berücksichtigung der Daten des Fahrzustandssensors bzw. Aufprallsensors erfolgen. Es ist eine fundierte Datenbasis geschaffen und die Bewertung sowie das Steuern der Stromversorgung können sehr differenziert erfolgen.

Vorzugsweise wird der Schritt des Steuerns der Stromversorgung vor Beginn des Zusammenstoßes des Kraftwagens mit dem Objekt eingeleitet. Bevor es überhaupt zu einem Unfall kommt, kann so die Stromversorgung in dem Stromnetz bereits geeignet auf den Unfall vorbereitet werden. Kritische Komponenten des Stromnetzes sind dann gegebenenfalls bereits zu Beginn des Unfalls stromfrei. Es ist ein hohes Maß an Sicherheit gewährleistet.

Besonders bevorzugt ist es, wenn der Schritt des Steuerns der Stromversorgung vor Beginn des Zusammenstoßes des Kraftwagens mit dem Objekt abgeschlossen wird. Dann ist die Stromversorgung in dem Stromnetz bereits zu Beginn des Unfalls vollständig auf den Unfall vorbereitet und ein hohes Maß an Sicherheit ist gewährleistet. Im Verlauf des Unfalls könnte die Stromversorgung aufgrund von Beschädigungen gegebenenfalls nicht mehr steuerbar sein. Die Ausführungsform schließt diesen Fall zuverlässig aus.

Vorzugsweise charakterisieren die zumindest zwei Bewertungen den Zusammenstoß des Kraftwagens mit dem Objekt hinsichtlich des Einflusses des Zusammenstoßes auf Komponenten des Stromnetzes, insbesondere eine Strombereitstellungsvorrichtung. Dann umfasst die Bewertung eine Information darüber, welche Komponenten des Stromnetzes von dem zu erwartenden Unfall besonders stark beeinträchtigt bzw. gegebenenfalls zerstört sein werden. Diese Komponenten können dann gegebenenfalls bereits vor Beginn des Unfalls stromlos bzw. ladungsfrei gesetzt werden. Komponenten, die vom Unfall beeinflusst werden, können deaktiviert werden, während voraussichtlich von dem Unfall unbeeinträchtigte Komponenten in einem funktionstüchtigen Zustand gehalten werden können.

Die erfindungsgemäße Vorrichtung umfasst Mittel zur Ausführung der Schritte des erfindungsgemäßen Verfahrens und dient zur Steuerung der Stromversorgung durch eine Strombereitstellungsvorrichtung in einem Stromnetz eines Kraftwagens und umfasst:
- zumindest einen Umfeldsensor, welcher dazu ausgebildet ist, Daten betreffend das Umfeld des Kraftwagens zu erfassen;
- eine Beurteilungsvorrichtung, welche dazu ausgebildet ist, einen potentiellen Zusammenstoß des Kraftwagens mit einem Objekt im Umfeld des Kraftwagens auf Basis der vom zumindest einen Umfeldsensor erfassten Daten durch Auswahl einer Bewertung aus zumindest zwei festlegbaren Bewertungen zu beurteilen, wobei die zumindest zwei festlegbaren Bewertungen einen Zusammenstoß des Kraftwagens mit einem Objekt hinsichtlich des Einflusses des Zusammenstoßes auf die Strombereitstellungsvorrichtung charakterisieren; und
- eine Steuervorrichtung, welche dazu ausgebildet ist, in Abhängigkeit von der ausgewählten Bewertung die Stromversorgung in dem Stromnetz des Kraftwagens gemäß einer festlegbaren Steuervorgabe zu steuern, wobei jeder der zumindest zwei festlegbaren Bewertungen eine spezifische Steuervorgabe zugeordnet ist, wobei der zumindest eine Umfeldsensor Bewegungs-, Positions- und Typinformationen von anderen Verkehrsteilnehmern liefern kann, das Verfahren eine Anpassung der Steuerung der Stromversorgung an die Schwere des Unfalls erlaubt, die zumindest zwei festlegbaren Bewertungen den Zusammenstoß des Kraftwagens mit dem Objekt hinsichtlich des Einflusses des Zusammenstoßes auf die Strombereitstellungsvorrichtung charakterisieren, eine erste Bewertung ausgewählt wird, falls bei einem hinsichtlich des Einflusses des Zusammenstoßes auf die Strombereitstellungsvorrichtung leichten Auffahrunfall zwischen dem Kraftwagen und dem Objekt der Zusammenstoß als unkritisch bewertet wird, wobei die erste Bewertung einer ersten Steuervorgabe zugeordnet ist, eine zweite Bewertung ausgewählt wird, falls bei einem hinsichtlich des Einflusses des Zusammenstoßes auf die Strombereitstellungsvorrichtung schwerwiegenden Unfall zwischen dem Kraftwagen und dem Objekt der Zusammenstoß als sehr kritisch bewertet wird, wobei die zweite Bewertung einer zweiten der Steuervorgaben zugeordnet ist, die erste der Steuervorgaben vorgibt, dass eine reversible Unterbrechung der Stromversorgung erfolgt, wobei für die reversible Unterbrechung in einer Strombereitstellungsvorrichtung vorhandene interne Schütze reversibel geöffnet werden, sodass von der Strombereitstellungsvorrichtung nach außen hin kein Strom bereitgestellt wird und die irreversible Unterbrechung durch eine pyrotechnische Trennung einer Stromleitung realisiert wird, sodass von der Strombereitstellungsvorrichtung nach außen hin kein Strom bereitgestellt wird, durch die zumindest zwei Bewertungen eine Wahrscheinlichkeit, ein Verlauf und eine Schwere des potentiellen Zusammenstoßes des Kraftwagens mit dem Objekt und ein voraussichtlicher Auftreffzeitpunkt des Objekts auf den Kraftwagen und eine potentielle Deformation des Kraftwagens und die zu erwartenden Belastungen auf die elektrischen Bauteile beurteilt werden, wobei bei reversibler Unterbrechung der Stromversorgung die Managementvorrichtung der Strombereitstellungsvorrichtung einem Fahrzeugführer erlaubt, die internen Schütze wieder zu schließen und selbsttätig die Strombereitstellungsvorrichtung zu aktivieren und bei irreversibler Unterbrechung der Stromversorgung die Managementvorrichtung der Strombereitstellungsvorrichtung gewährleistet, dass durch Eingabe eines Codes nur Fachpersonal die Strombereitstellungsvorrichtung in einen aktiven Zustand überführen kann.

Ein erfindungsgemäßer Kraftwagen umfasst eine erfindungsgemäße Vorrichtung sowie ein Stromnetz.

Vorzugsweise umfasst dann das Stromnetz eine Strombereitstellungsvorrichtung, insbesondere eine Traktionsbatterie.

Die mit Bezug auf das erfindungsgemäße Verfahren vorgestellten bevorzugten Ausführungsformen und deren Vorteile gelten entsprechend für die erfindungsgemäße Vorrichtung und den erfindungsgemäßen Kraftwagen.

Anhand von Ausführungsbeispielen wird die Erfindung im Folgenden näher erläutert. Es zeigen:
- Fig. 1: zwei Kraftwägen, zwischen denen eine Kollision droht;
- Fig. 2: eine schematische Darstellung von Komponenten eines Stromnetzes eines Kraftwagens; und
- Fig. 3: eine schematische Darstellung eines Entscheidungsverfahrens, welches in einem Rechner des Kraftwagens abläuft.

In den Figuren sind gleiche oder funktionsgleiche Elemente mit den gleichen Bezugszeichen versehen.

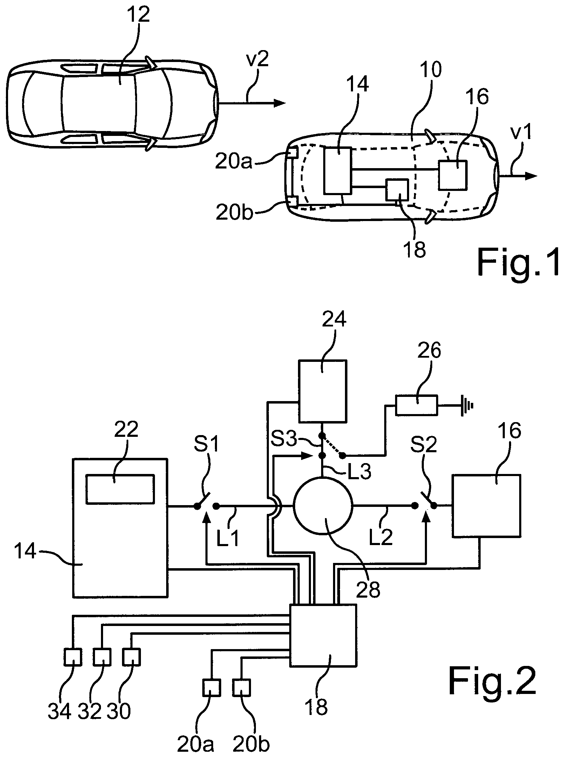

Fig. 1 zeigt einen Kraftwagen 10, der sich im Bild von links nach rechts mit einer Geschwindigkeit v1 bewegt. Ebenso ist ein Kraftwagen 12 gezeigt, der sich in dieselbe Richtung mit der Geschwindigkeit v2 bewegt, welche größer als die Geschwindigkeit v1 ist. Es droht folglich eine Kollision zwischen den Kraftwägen 10 und 12, wobei der Kollisionspunkt voraussichtlich im linken Heckbereich des Kraftwagens 10 liegen wird. Um eine solche Kollisionssituation frühzeitig zu erkennen, umfasst der Kraftwagen 10 ein Sicherheitssystem mit zwei Umfeldsensoren 20a und 20b, welche an einen Rechner 18 angeschlossen sind. Der Rechner 18 kann steuernd auf eine Traktionsbatterie 14 einwirken, welche elektrische Energie zum Betrieb einer elektrischen Maschine 16 bereitstellt.

Der Umfeldsensor 20a, welcher als Radarsensor ausgebildet ist, erfasst Abstand und Geschwindigkeit v2 des Kraftwagens 12. Der Umfeldsensor 20a kann alternativ auch als Laser-, Kamera- oder Ultraschallsensor ausgebildet sein. Diese Daten werden dem Rechner 18 bereitgestellt, in dem erkannt wird, dass eine Kollision droht. Der Rechner 18 ist jedoch nicht nur in der Lage, zu unterscheiden, ob eine Kollision droht oder nicht, sondern er kann die voraussichtliche Kollisionssituation auch qualitativ beurteilen. Aufgrund der hohen Geschwindigkeitsdifferenz v2-v1 sowie dem voraussichtlichen Auftreffpunkt des Kraftwagens 12 auf den Kraftwagen 10 erfolgt eine kritische Bewertung. Im Heckbereich des Kraftwagens 10, in dem die Kollision droht, befindet sich nämlich auch die Traktionsbatterie 14, die bei der Kollision in Mitleidenschaft gezogen werden kann. Deshalb legt ein in dem Rechner 18 ablaufendes Softwareprogramm nach einem vorbestimmten Algorithmus fest, dass die Traktionsbatterie 14 aus Sicherheitsgründen irreversibel abgeschaltet wird. Wäre dagegen die Geschwindigkeitsdifferenz v2-v1 geringer, würde der Rechner 18 die Bewertung ausgeben, die Traktionsbatterie 14 nur reversibel abzuschalten. Da bei einem leichten Auffahrunfall nicht davon auszugehen ist, dass die Traktionsbatterie 14 schwer beschädigt wird, steht die Betriebstüchtigkeit des Kraftwagens 10 im Vordergrund. Der Fahrzeugführer des Kraftwagens 10 soll dann in der Lage sein, die abgeschaltete Traktionsbatterie 14 selbstständig wieder zu aktivieren und so den Kraftwagen 10 in einen betriebsbereiten Zustand zu versetzen.

Fig. 2 zeigt eine differenziertere Ausgestaltung des Sicherheitssystems, welches im Kraftwagen 10 vorhanden ist. Neben den Daten, die der Rechner 18 über die Umfeldsensoren 20a, 20b erhält, werden ihm auch Daten eines Aufprallsensors 30, eines Sensors 32 sowie eines Beschleunigungssensors 34 bereitgestellt. Der Aufprallsensor 30 ist in der Lage, Deformationen an der Karosserie des Kraftwagens 10 zu detektieren. Der Sensor 32 ist Teil eines Antiblockiersystems des Kraftwagens 10 und detektiert Betätigungen des Bremspedals. Der Beschleunigungssensor 34 kann einen Überschlag des Kraftwagens 10 erkennen. Die bisher nur für die Ansteuerung von Fahrerassistenzsystemen, Notbremssystemen, etc. genutzten Daten der Sensoren 20a, 20b, 30, 32, 34 werden hier also für die Ansteuerung der elektrischen Komponenten, die für Elektro- und Hybridfahrzeuge spezifisch sind, genutzt.

Es können verschiedene Umfeldsensoren und Fahrzeugeigensensoren vorgesehen sein. Die Umfeldsensoren können hierbei an der Front, am Heck oder an der Seite des Kraftwagens 10 angebracht sein. Sie können Bewegungs-, Positions- und Typinformationen von anderen Verkehrsteilnehmern liefern. Die Sensoren können insbesondere dazu ausgebildet sein, dem Rechner 18 Informationen über die Kontur des Kraftwagens 12, den voraussichtlichen Auftreffpunkt des Kraftwagens 12 auf den Kraftwagen 10, den voraussichtlichen Auftreffwinkel, die voraussichtliche Auftreffgeschwindigkeit, den voraussichtlichen Auftreffzeitpunkt und die zu erwartenden Belastungen (Beschleunigungen, Deformationen etc.) auf die elektrischen Bauteile (Leistungselektronik, Kabel etc.) des Kraftwagens 10 zu liefern.

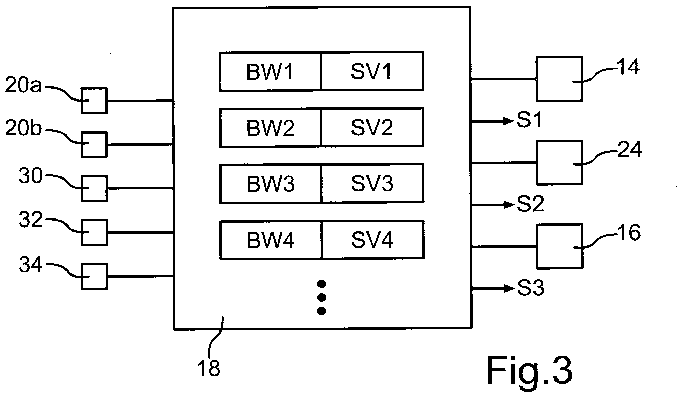

Der Rechner 18 umfasst sowohl eine Beurteilungsvorrichtung als auch eine Steuervorrichtung. In der Beurteilungsvorrichtung wird die Vielzahl an Daten, die von den Sensoren 20a, 20b, 30, 32 und 34 geliefert wird, ausgewertet und es wird prognostiziert, ob ein Zusammenstoß des Kraftwagens 10 mit dem Kraftwagen 12 droht. Zudem erfolgt eine Beurteilung des voraussichtlichen Unfallverlaufs. Wie in Fig. 3 dargestellt, sind hierbei den verschiedenen Eingangsparametern unterschiedliche Szenarien zugeordnet. Jedem dieser Szenarien bzw. jeder dieser Bewertungen BW1, BW2, BW3, BW4, etc. sind geeignete Steuervorgaben SV1, SV2, SV3, SV4, etc. zugeordnet. Auf Basis der Steuervorgaben SV1, SV2, SV3, SV4, etc. kann der Rechner 18 steuernd auf ein Stromnetz 28 des Kraftwagens 10 einwirken. In diesem Stromnetz 28 liegen die Traktionsbatterie 14, die elektrische Maschine 16 sowie ein Kondensator 24 vor, die über Leitungen L1, L2 und L3 miteinander verbunden sind. Die Traktionsbatterie 14 kann über einen Schalter S1, die elektrische Maschine 16 über einen Schalter S2 und der Kondensator 24 über einen Schalter S3 vom Stromnetz 28 getrennt werden.

Die Steuervorgabe SV1 besteht darin, durch Öffnen aller Schalter S1, S2 und S3 die Komponenten 14, 16 und 24 vom Stromnetz 28 zu trennen und so die Stromfreiheit des Stromnetzes 28 zu gewährleisten. Diese Trennung wird durchgeführt, wenn die Bewertung BW1 erfolgt, dass ein schwerwiegender Unfall droht. Dann wird aus Sicherheitsgründen das gesamte Stromnetz 28 stromlos gesetzt.

Eine alternative Bewertung BW2 besteht darin, dass es nur zu einem leichten Auffahrunfall zwischen den Kraftwägen 10 und 12 kommen wird. Dann besagt die zugeordnete Steuervorgabe SV2, dass die Traktionsbatterie 14 intern reversibel stromlos geschaltet wird. Hierzu steuert der Rechner 18 eine Batteriemanagementvorrichtung 22 an, die sich innerhalb der Traktionsbatterie 14 befindet. Diese Batteriemanagementvorrichtung 22 öffnet in der Traktionsbatterie 14 vorhandene interne Schütze, so dass von der Traktionsbatterie 14 nach außen hin kein Strom bereitgestellt wird. Die Deaktivierung erfolgt reversibel, d.h. die Batteriemanagementvorrichtung 22 erlaubt es einem Fahrzeugführer, z.B. durch Drehen des Zündschlüssels, die Schütze wieder zu schließen und selbstständig die Traktionsbatterie 14 zu aktivieren.

Wird der Unfall dagegen gemäß einer Bewertung BW3 als schwerwiegend eingestuft, so erfolgt eine andere Steuervorgabe SV3, gemäß der die Batteriemanagementvorrichtung 22 angewiesen wird, die Traktionsbatterie 14 irreversibel zu deaktivieren. Die Batteriemanagementvorrichtung 22 gewährleistet dann, dass nur Fachpersonal die Traktionsbatterie 14 wieder in einen aktiven, stromliefernden Zustand überführen kann, z.B. durch Eingabe eines Codes. Eine schwerwiegende Beschädigung der Traktionsbatterie 14 oder sogar das Auslösen eines Brandes wird also dadurch verhindert, dass es dem Fahrzeugführer nicht möglich ist, die Traktionsbatterie 14 selbstständig zu aktivieren. Es kann zudem ein Eintrag in einen Speicher der Batteriemanagementvorrichtung 22 über die Art und Schwere des Unfalls erfolgen.

Entsprechend der Bewertung BW4 wird es durch den ablaufenden Algorithmus, also ein einprogrammiertes Kriterium, als notwendig erachtet, den aufgeladenen Kondensator 24 schnellstmöglich zu entladen. Dementsprechend erfolgt eine Steuervorgabe SV4, mit der der Schalter S3 in die gestrichelt eingezeichnete Position verbracht wird. Der Kondensator 24 wird dann über einen geerdeten Widerstand 26 bzw. über einen Kurzschluss sehr schnell entladen. Da die Aufpralldauer typischerweise 100-200 ms beträgt, die Entladung eines Kondensators 24 jedoch 1s in Anspruch nimmt, ist es erforderlich, die Entladung des Kondensators 24 bereits sehr frühzeitig zu beginnen. Dieser ist dann im Idealfall bereits zum Zeitpunkt des Zusammenstoßes ladungsfrei und stellt keine Gefahr mehr dar.

## Patentansprüche

1. Verfahren zum Steuern der Stromversorgung durch eine Strombereitstellungsvorrichtung (14,16,24) in einem Stromnetz (28) eines Kraftwagens (10) mit den Schritten:
a) Erfassen von Daten betreffend das Umfeld des Kraftwagens (10) mittels zumindest eines Umfeldsensors (20a, 20b);
b) Beurteilen eines potentiellen Zusammenstoßes des Kraftwagens (10) mit einem Objekt (12) im Umfeld des Kraftwagens (10) auf Basis der von dem zumindest einen Umfeldsensor (20a, 20b) erfassten Daten durch Auswahl einer Bewertung (BW1, BW2, BW3, BW4) aus zumindest zwei festlegbaren Bewertungen (BW1, BW2, BW3, BW4), wobei die zumindest zwei festlegbaren Bewertungen (BW1, BW2, BW3, BW4) einen Zusammenstoß des Kraftwagens (10) mit einem Objekt (12) charakterisieren; und
c) In Abhängigkeit von der ausgewählten Bewertung (BW1, BW2, BW3, BW4), Steuern der Stromversorgung in dem Stromnetz (28) des Kraftwagens (10) gemäß einer festlegbaren Steuervorgabe (SV1, SV2, SV3, SV4), wobei jeder der zumindest zwei festlegbaren Bewertungen (BW1; BW2; BW3; BW4) eine spezifische Steuervorgabe (SV1; SV2; SV3; SV4) zugeordnet ist;
**dadurch gekennzeichnet, dass** der zumindest eine Umfeldsensor (20a,20b) Bewegungs-, Positions- und Typinformationen von anderen Verkehrsteilnehmern liefern kann, dass das Verfahren eine Anpassung der Steuerung der Stromversorgung an die Schwere eines Unfalls erlaubt, die zumindest zwei festlegbaren Bewertungen (BW1, BW2, BW3, BW4) den Zusammenstoß des Kraftwagens (10) mit dem Objekt (12) hinsichtlich des Einflusses des Zusammenstoßes auf die Strombereitstellungsvorrichtung (14, 16, 24), charakterisieren, eine erste Bewertung (BW2) ausgewählt wird, falls bei einem hinsichtlich des Einflusses des Zusammenstoßes auf die Strombereitstellungsvorrichtung (14,16,24) leichten Auffahrunfall zwischen dem Kraftwagen (10) und dem Objekt (12) der Zusammenstoß als unkritisch bewertet wird, wobei die erste Bewertung (BW2) einer ersten der Steuervorgaben (SV2) zugeordnet ist,
eine zweite Bewertung (BW3) ausgewählt wird, falls bei einem hinsichtlich des Einflusses des Zusammenstoßes auf die Strombereitstellungsvorrichtung (14,16,24) schwerwiegenden Unfall zwischen dem Kraftwagen (10) und dem Objekt (12) der Zusammenstoß als sehr kritisch bewertet wird, wobei die zweite Bewertung (BW3) einer zweiten der Steuervorgaben (SV3) zugeordnet ist, die erste der Steuervorgaben (SV2) vorgibt, dass eine reversible Unterbrechung der Stromversorgung erfolgt, und die zweite der Steuervorgaben (SV3) vorgibt, dass eine im Rahmen der Kraftfahrzeugsteuerung irreversible Unterbrechung der Stromversorgung erfolgt, wobei für die reversible Unterbrechung in einer Strombereitstellungsvorrichtung (14,16,24) vorhandene interne Schütze reversibel geöffnet werden, sodass von der Strombereitstellungsvorrichtung (14,16,24) nach außen hin kein Strom bereitgestellt wird und die irreversible Unterbrechung durch eine pyrotechnische Trennung einer Stromleitung realisiert wird, sodass von der Strombereitstellungsvorrichtung (14,16,24) nach außen hin kein Strom bereitgestellt wird, und dass durch die zumindest zwei Bewertungen (BW1, BW2, BW3, BW4) eine Wahrscheinlichkeit, ein Verlauf und eine Schwere des potentiellen Zusammenstoßes des Kraftwagens (10) mit dem Objekt (12) und ein Aufprallbereich zwischen Kraftwagen (10) und Objekt (12) und ein Aufprallwinkel zwischen Kraftwagen (10) und Objekt (12) und eine Relativgeschwindigkeit (v2-v1) zwischen Kraftwagen (10) und Objekt (12) und ein voraussichtlicher Auftreffzeitpunkt des Objekts (12) auf den Kraftwagen (10) und eine potentielle Deformation des Kraftwagens (10) und die zu erwartenden Belastungen auf die elektrischen Bauteile beurteilt werden, wobei bei reversibler Unterbrechung der Stromversorgung die Managementvorrichtung (22) der Strombereitstellungsvorrichtung (14,16,24) einem Fahrzeugführer erlaubt, die internen Schütze wieder zu schließen und selbsttätig die Strombereitstellungsvorrichtung (14,16,24) zu aktivieren und bei irreversibler Unterbrechung der Stromversorgung die Managementvorrichtung (22) der Strombereitstellungsvorrichtung (14,16,24) gewährleistet, dass durch Eingabe eines Codes nur Fachpersonal die Strombereitstellungsvorrichtung (14,16,24) in einen aktiven Zustand überführen kann.

2. Verfahren nach Anspruch 1,
**dadurch gekennzeichnet, dass**
zumindest eine der Steuervorgaben (SV1, SV2, SV3, SV4) vorgibt, auf welche Art die Stromversorgung in dem Stromnetz (28) zumindest teilweise unterbrochen wird.

3. Verfahren nach einem der vorhergehenden Ansprüche,
**dadurch gekennzeichnet, dass**
zumindest eine der Steuervorgaben (SV1, SV2, SV3, SV4) vorgibt, auf welche Art die für die Stromversorgung in dem Stromnetz (28) vorgesehene Strombereitstellungsvorrichtung (14, 16, 24), insbesondere die Traktionsbatterie (14) und/oder ein Kondensator (24) und/oder ein Generator (16) und/oder eine elektrische Maschine (16), betrieben oder angeschlossen wird.

4. Verfahren nach einem der vorhergehenden Ansprüche mit dem Schritt a1) Erfassen von Daten betreffend einen Fahrzustand (v1) des Kraftwagens (10) und/oder einen Zusammenstoß des Kraftwagens (10) mit einem Objekt (12) mittels eines Fahrzustandssensors (32, 34) oder Aufprallsensors (30); und
wobei der Schritt des Beurteilens umfasst:
Beurteilen des Zusammenstoßes des Kraftwagens (10) mit dem Objekt (12) auf Basis der von dem zumindest einen Umfeldsensor (20a, 20b) und dem Fahrzustandssensor (32, 34), bzw. dem zumindest einen Umfeldsensor (20a, 20b) und dem Aufprallsensor (30) erfassten Daten durch Auswahl einer Bewertung (BW1, BW2, BW3, BW4) aus den zumindest zwei festlegbaren Bewertungen (BW1, BW2, BW3, BW4).

5. Verfahren nach einem der vorhergehenden Ansprüche,
**dadurch gekennzeichnet, dass**
der Schritt des Steuerns der Stromversorgung vor Beginn des Zusammenstoßes des Kraftwagens (10) mit dem Objekt (12) eingeleitet wird.

6. Verfahren nach Anspruch 4,
**dadurch gekennzeichnet, dass**
der Schritt des Steuerns der Stromversorgung vor Beginn des Zusammenstoßes des Kraftwagens (10) mit dem Objekt (12) abgeschlossen wird.

7. Vorrichtung zur Steuerung der Stromversorgung durch eine Strombereitstellungsvorrichtung (14,16,24) in einem Stromnetz (28) eines Kraftwagens (10) umfassend Mittel zur Ausführung der Schritte des Verfahrens nach einem der Ansprüche 1 bis 6 mit
- zumindest einem Umfeldsensor (20a, 20b), welcher dazu ausgebildet ist, Daten betreffend das Umfeld des Kraftwagens (10) zu erfassen;
- einer Beurteilungsvorrichtung (18), welche dazu ausgebildet ist, einen potentiellen Zusammenstoß des Kraftwagens (10) mit einem Objekt (12) im Umfeld des Kraftwagens (10) auf Basis der von dem zumindest einen Umfeldsensor (20a, 20b) erfassten Daten durch Auswahl einer Bewertung (BW1, BW2, BW3, BW4) aus zumindest zwei festlegbaren Bewertungen (BW1, BW2, BW3, BW4) zu beurteilen, wobei die zumindest zwei festlegbaren Bewertungen (BW1, BW2, BW3, BW4) einen Zusammenstoß des Kraftwagens (10) mit einem Objekt (12) hinsichtlich des Einflusses des Zusammenstoßes auf die Strombereitstellungsvorrichtung (14,16,24) charakterisieren; und
- einer Steuervorrichtung (18), welche dazu ausgebildet ist, in Abhängigkeit von der ausgewählten Bewertung (BW1, BW2, BW3, BW4) die Stromversorgung in dem Stromnetz (28) des Kraftwagens (10) gemäß einer festlegbaren Steuervorgabe (SV1, SV2, SV3, SV4) zu steuern, wobei jeder der zumindest zwei festlegbaren Bewertungen (BW1, BW2, BW3, BW4) eine spezifische Steuervorgabe (SV1, SV2, SV3, SV4) zugeordnet ist;
**dadurch gekennzeichnet, dass** der zumindest eine Umfeldsensor (20a,20b) Bewegungs-, Positions- und Typinformationen von anderen Verkehrsteilnehmern liefern kann, dass die zumindest zwei festlegbaren Bewertungen (BW1, BW2, BW3, BW4) den Zusammenstoß des Kraftwagens (10) mit dem Objekt (12) hinsichtlich des Einflusses des Zusammenstoßes auf die Strombereitstellungsvorrichtung (14, 16, 24), charakterisieren, die Steuervorrichtung (18) dazu ausgebildet ist, eine Anpassung der Steuerung der Stromversorgung an die Schwere eines Unfalls zu erlauben, eine erste Bewertung (BW2) auszuwählen, falls bei einem hinsichtlich des Einflusses des Zusammenstoßes auf die Strombereitstellungsvorrichtung (14,16,24) leichten Auffahrunfall zwischen dem Kraftwagen (10) und dem Objekt (12) der Zusammenstoß als unkritisch bewertet wird, wobei die erste Bewertung (BW2) einer ersten der Steuervorgaben (SV2) zugeordnet ist, eine zweite Bewertung (BW2) auszuwählen, falls bei einem hinsichtlich des Einflusses des Zusammenstoßes auf die Strombereitstellungsvorrichtung (14,16,24) schwerwiegenden Unfall zwischen dem Kraftwagen (10) und dem Objekt (12) der Zusammenstoß als sehr kritisch bewertet wird, wobei die zweite Bewertung (BW3) einer zweiten der Steuervorgaben (SV3) zugeordnet ist,
die erste der Steuervorgaben (SV2) vorgibt, dass eine reversible Unterbrechung der Stromversorgung erfolgt, und die zweite der Steuervorgaben (SV3) vorgibt, dass eine im Rahmen der Kraftfahrzeugsteuerung irreversible Unterbrechung der Stromversorgung erfolgt, wobei für die reversible Unterbrechung in einer Strombereitstellungsvorrichtung (14,16,24) vorhandene interne Schütze reversibel geöffnet werden, sodass von der Strombereitstellungsvorrichtung (14,16,24) nach außen hin kein Strom bereitgestellt wird und die irreversible Unterbrechung durch eine pyrotechnische Trennung einer Stromleitung realisiert wird, sodass von der Strombereitstellungsvorrichtung (14,16,24) nach außen hin kein Strom bereitgestellt wird, und dass die Steuervorrichtung (18) dazu ausgebildet ist, durch die zumindest zwei festlegbaren Bewertungen (BW1, BW2, BW3, BW4) eine Wahrscheinlichkeit, ein Verlauf und eine Schwere des potentiellen Zusammenstoßes des Kraftwagens (10) mit dem Objekt (12) und ein Aufprallbereich zwischen Kraftwagen (10) und Objekt (12) und ein Aufprallwinkel zwischen Kraftwagen (10) und Objekt (12) und eine Relativgeschwindigkeit (v2-v1) zwischen Kraftwagen (10) und Objekt (12) und ein voraussichtlicher Auftreffzeitpunkt des Objekts (12) auf den Kraftwagen (10) und eine potentielle Deformation des Kraftwagens (10) und die zu erwartenden Belastungen auf die elektrischen Bauteile zu beurteilen, wobei bei reversibler Unterbrechung der Stromversorgung die Managementvorrichtung (22) der Strombereitstellungsvorrichtung (14,16,24) einem Fahrzeugführer erlaubt, die internen Schütze wieder zu schließen und selbsttätig die Strombereitstellungsvorrichtung (14,16,24) zu aktivieren und bei irreversibler Unterbrechung der Stromversorgung die Managementvorrichtung (22) der Strombereitstellungsvorrichtung (14,16,24) gewährleistet, dass durch Eingabe eines Codes nur Fachpersonal die Strombereitstellungsvorrichtung (14,16,24) in einen aktiven Zustand überführen kann.

8. Kraftwagen (10) mit einer Vorrichtung nach Anspruch 7 und einem Stromnetz (28).

9. Kraftwagen nach Anspruch 8,
**dadurch gekennzeichnet, dass**
das Stromnetz (28) die Strombereitstellungsvorrichtung (14 ,16, 24), insbesondere die Traktionsbatterie (14), umfasst.

## Claims

1. Method for controlling the supply of power by means of a power supply device (14, 16, 24) in a power supply (28) of a motor vehicle (10) with the steps:
a) recording data concerning the environment of the motor vehicle (10) by means of at least one environmental sensor (20a, 20b);
b) assessing a potential collision of the motor vehicle (10) with an object (12) in the environment of the motor vehicle (10) based on the data recorded by the at least one environmental sensor (20a, 20b), by selecting an assessment (BW1, BW2, BW3, BW4) from at least two determinable assessments (BW1, BW2, BW3, BW4), wherein the at least two determinable assessments (BW1, BW2, BW3, BW4) characterise a collision of the motor vehicle (10) with an object (12); and
c) controlling the supply of power in the power supply (28) of the motor vehicle (10) according to a determinable control specification (SV1, SV2, SV3, SV4) as a function of the selected assessment (BW1, BW2, BW3, BW4), wherein a specific control specification (SV1, SV2, SV3, SV4) is assigned to each of the at least two determinable assessments (BW1; BW2; BW3; BW4);
**characterised in that** the at least one environmental sensor (20a, 20b) can deliver motion, position and type information of different traffic participants, that the method allows an adaptation of the controlling of the supply of power to the severity of an accident, the at least two determinable assessments (BW1, BW2, BW3, BW4) characterise the collision of the motor vehicle (10) with the object (12) regarding the influence of the collision on the power supply device (14, 16, 24), a first assessment (BW2) is selected if a collision of the motor vehicle (10) with the object (12) which is slight with respect to the influence of the collision on a power supply device (14, 16, 24) is assessed as non-critical, wherein the first assessment (BW2) is assigned to a first control specification (SV2), a second assessment (BW3) is selected if a collision of the motor vehicle (10) with the object (12) which is serious with respect to the influence of the collision on a power supply device (14, 16, 24) is assessed as very critical, wherein the second assessment (BW3) is assigned to a second control specification (SV3), the first control specification (SV2) prescribes that a reversible interruption of the supply of power takes place, and the second control specification (SV3) prescribes that an irreversible interruption of the power supply in the context of the motor vehicle control is carried out, wherein internal protections present in a power supply device (14, 16, 24) are reversibly opened for the reversible interruption, such that no power is provided externally by the power supply device (14, 16, 24) and the irreversible interruption is implemented by a pyrotechnical separation of a power line, such that no power is provided externally by the power supply device (14, 16, 24), and that a probability, a course and a severity of the potential collision of the motor vehicle (10) with the object (12) and an impact region between motor vehicle (10) and object (12) and an impact angle between motor vehicle (10) and object (12) and a relative speed (v2-v1) between motor vehicle (10) and object (12) and a likely impact time of the object (12) on the motor vehicle (10) and a potential deformation of the motor vehicle (10) and the stresses to be expected on the electric components are assessed by the at least two assessments (BW1, BW2, BW3, BW4), wherein in the case of a reversible interruption of the supply of power the management device (22) of the power supply device (14, 16, 24) allows a driver of the vehicle to reclose the internal protections and to automatically activate the power supply device (14, 16, 24) and in the case of an irreversible interruption of the supply of power the management device (22) guarantees to the power supply device (14, 16, 24) that only specialist personnel can change the power supply device (14, 16, 24) into an active state by inputting a code.

2. Method according to claim 1,
**characterised in that**
at least one of the control specifications (SV1, SV2, SV3, SV4) specifies the manner in which the supply of power in the power supply (28) is at least partially interrupted.

3. Method according to any one of the preceding claims,
**characterised in that**
at least one of the control specifications (SV1, SV2, SV3, SV4) specifies the manner in which the power supply device (14, 16, 24) provided for the supply of power in the power supply (28), in particular the traction battery (14) and/or a capacitor (24) and/or a generator (16) and/or an electric machine (16) is operated or connected.

4. Method according to any one of the preceding claims with the step a1) recording data concerning a driving status (v1) of the motor vehicle (10) and/or a collision of the motor vehicle (10) with an object (12) by means of a driving status sensor (32, 34) or impact sensor (30); and
wherein the step of assessing comprises;
assessing the collision of the motor vehicle (10) with the object (12) based on the data recorded by the at least one environmental sensor (20a, 20b) and the vehicle status sensor (32, 34), or the at least one environmental sensor (20a, 20b) and the impact sensor (30), by selecting an assessment (BW1, BW2, BW3, BW4) from the at least two determinable assessments (BW1, BW2, BW3, BW4).

5. Method according to any one of the preceding claims,
**characterised in that**
the step of controlling the power supply is initiated prior to the beginning of the collision of the motor vehicle (10) with the object (12).

6. Method according to claim 4,
**characterised in that**
the step of controlling the power supply is concluded prior to the beginning of the collision of the motor vehicle (10) with the object (12).

7. Device for controlling the supply of power by means of a power supply device (14, 16, 24) in a power supply (28) of a motor vehicle (10) comprising means for performing the steps of the method according to any one of claims 1 to 6 with
- at least one environmental sensor (20a, 20b), which is configured to record data concerning the environment of the motor vehicle (10);
- an assessment device (18) which is designed to assess a potential collision of the motor vehicle (10) with an object (12) in the environment of the motor vehicle (10) based on the data captured by the at least one environmental sensor (20a, 20b) by selecting an assessment (BW1, BW2, BW3, BW4) from at least two determinable assessments (BW1, BW2, BW3, BW4), wherein the at least two determinable assessments (BW1, BW2, BW3, BW4) characterise a collision of the motor vehicle (10) with an object (12) with respect to the influence of the collision on the power supply device (14, 16, 24); and
- a control device (18) which is designed to control the supply of power in the power supply (28) of the motor vehicle (10) according to a determinable control specification (SV1, SV2, SV3, SV4) as a function of the selected assessment (BW1, BW2, BW3, BW4), wherein a specific control specification (SV1, SV2, SV3, SV4) is assigned to each of the at least two determinable assessments (BW1, BW2, BW3, BW4) ;
**characterised in that** the at least one environmental sensor (20a, 20b) can deliver motion, position and type information of other traffic participants, that
the at least two determinable assessments (BW1, BW2, BW3, BW4) characterise the collision of the motor vehicle (10) with the object (12) with regard to the influence of the collision on the power supply device (14, 16, 24), the control device (18) is designed to allow an the control of the power supply to be adapted to the severity of an accident, to select a first assessment (BW2) if the collision of the motor vehicle (10) with the object (12) which is slight with respect to the influence of the collision on the power supply device (14, 16, 24) is assessed as non-critical, wherein the first assessment (BW2) is assigned to a first control specification (SV2), to select a second assessment (BW2) if the collision of the motor vehicle (10) with the object (12) which is severe with respect to the influence of the collision on the power supply device (14, 16, 24) is assessed as very critical, wherein the second assessment (BW3) is assigned to a second control specification (SV3),
the first control specification (SV2) specifies that a reversible interruption of the power supply is carried out, and the second control specification (SV3) specifies that an irreversible interruption of the power supply is carried out in the context of the motor vehicle control, wherein internal protections present in a power supply device (14, 16, 24) for the reversible interruption are reversibly opened, such that no power is provided externally by the power supply device (14, 16, 24) and the irreversible interruption is implemented by a pyrotechnical separation of a power line, such that no power is provided externally by the power supply device (14, 16, 24), and that the control device (18) is configured to assess by the at least two determinable assessments (BW1, BW2, BW3, BW4), a probability, a course and a severity of the potential collision of the motor vehicle (10) with the object (12) and an impact region between motor vehicle (10) and object (12) and an impact angle between motor vehicle (10) and object (12) and a relative speed (v2-v1) between motor vehicle (10) and object (12) and a likely impact time of the object (12) on the motor vehicle (10) and a potential deformation of the motor vehicle (10) and the stresses to be expected on the electric components, wherein in the case of a reversible interruption of the supply of power, the management device (22) of the power supply device (14, 16, 24) allows a driver of the vehicle to reclose the internal protections and to automatically activate the power supply device (14, 16, 24) and in the case of an irreversible interruption of the supply of power the management device (22) guarantees to the power supply device (14, 16, 24) that only skilled personnel can change the power supply device (14, 16, 24) into an active state by inputting a code.

8. Motor vehicle (10) with a device according to claim 7 and a power supply (28).

9. Motor vehicle according to claim 8,
**characterised in that**
the power supply (28) comprises the power supply device (14, 16, 24), in particular the traction battery (14).

## Revendications

1. Procédé de commande de l'alimentation électrique par un dispositif de fourniture de courant (14, 16, 24) dans un réseau électrique (28) d'un véhicule automobile (10), comprenant les étapes consistant à :
a) recueillir des données concernant le champ ambiant du véhicule automobile (10) au moyen d'au moins un capteur ambiant (20a, 20b) ;
b) évaluer un choc frontal potentiel du véhicule automobile (10) avec un objet (12) dans le champ ambiant du véhicule automobile (10) sur la base des données recueillies par l'au moins un capteur ambiant (20a, 20b) par sélection d'une évaluation (BW1, BW2, BW3, BW4) parmi au moins deux évaluations déterminables (BW1, BW2, BW3, BW4), dans lequel les au moins deux évaluations déterminables (BW1, BW2, BW3, BW4) caractérisent un choc frontal du véhicule automobile (10) avec un objet (12) ; et
c) en fonction de l'évaluation sélectionnée (BW1, BW2, BW3, BW4), commander l'alimentation électrique dans le réseau électrique (28) du véhicule automobile (10) selon une prévision de commande déterminable (SV1, SV2, SV3, SV4), dans lequel est affectée à chacune des au moins deux évaluations déterminables (BW1 ; BW2 ; BW3 ; BW4) une prévision de commande spécifique (SV1 ; SV2 ; SV3 ; SV4) ;
**caractérisé en ce que** l'au moins un capteur ambiant (20a, 20b) peut fournir des informations de mouvement, de position et de type d'autres usagers de la voie publique, le procédé permet une adaptation de la commande de l'alimentation électrique à la gravité d'un accident, les au moins deux évaluations déterminables (BW1, BW2, BW3, BW4) caractérisent le choc frontal du véhicule automobile (10) avec l'objet (12) en ce qui concerne l'influence du choc frontal sur le dispositif de fourniture de courant (14, 16, 24), une première évaluation (BW2) est sélectionnée dans le cas où le choc frontal est considéré comme non critique compte tenu de l'influence du choc frontal sur le dispositif de fourniture de courant (14, 16, 24) en raison d'une légère collision par l'arrière entre le véhicule automobile (10) et l'objet (12), dans lequel la première évaluation (BW2) est affectée à une première des prévisions de commande (SV2),
une deuxième évaluation (BW3) est sélectionnée dans le cas où le choc frontal est considéré comme très critique compte tenu de l'influence du choc frontal sur le dispositif de fourniture de courant (14, 16, 24) en raison de la gravité de l'accident entre le véhicule automobile (10) et l'objet (12), dans lequel la deuxième évaluation (BW3) est affectée à une deuxième des prévisions de commande (SV3), la première des prévisions de commande (SV2) prévoit qu'il se produise une rupture réversible de l'alimentation électrique, et la seconde des prévisions de commande (SV3) prévoit qu'il se produise une rupture irréversible de l'alimentation électrique dans le cadre de la commande du véhicule automobile, dans lequel des contacteurs internes présents dans un dispositif de fourniture de courant (14, 16, 24) pour la rupture réversible sont ouverts de manière réversible de sorte qu'aucun courant ne soit fourni par le dispositif de fourniture de courant (14, 16, 24) vers l'extérieur, et la rupture irréversible est réalisée par une séparation pyrotechnique d'une conduite de courant de sorte qu'aucun courant ne soit fourni par le dispositif de fourniture de courant (14, 16, 24) vers l'extérieur et l'on évalue par les au moins deux évaluations (BW1, BW2, BW3, BW4) une probabilité, un déroulement et une gravité du choc frontal potentiel du véhicule automobile (10) avec l'objet (12) et une zone de collision entre le véhicule automobile (10) et l'objet (12) et un angle de collision entre le véhicule automobile (10) et l'objet (12) ainsi qu'une vitesse relative (v2-v1) entre le véhicule automobile (10) et l'objet (12) et un moment d'impact prévisible de l'objet (12) sur le véhicule automobile (10) et une déformation potentielle du véhicule automobile (10) et les charges à escompter sur les composants électriques, dans lequel, lors d'une rupture réversible de l'alimentation électrique, le dispositif de gestion (22) du dispositif de fourniture de courant (14, 16, 24) permet à un chauffeur de véhicule de refermer les contacteurs internes et d'activer automatiquement le dispositif de fourniture de courant (14, 16, 24) et lors d'une rupture irréversible de l'alimentation électrique, le dispositif de gestion (22) du dispositif de fourniture de courant (14, 16, 24) garantit que, par introduction d'un code, seul le personnel spécialisé puisse faire repasser le dispositif de fourniture de courant (14, 16, 24) dans un état actif.

2. Procédé selon la revendication 1,
**caractérisé en ce que**
au moins l'une des prévisions de commande (SV1, SV2, SV3, SV4) prévoit de quelle manière l'alimentation électrique sera interrompue au moins en partie dans le réseau électrique (28).

3. Procédé selon l'une des revendications précédentes,
**caractérisé en ce que**
au moins l'une des prévisions de commande (SV1, SV2, SV3, SV4) indique de quelle manière le dispositif de fourniture de courant (14, 16, 24) prévu pour l'alimentation électrique dans le réseau électrique (28), en particulier la batterie de traction (14) et/ou un condensateur (24) et/ou un générateur (16) et/ou un moteur électrique (16), sera mis(e) en marche ou connecté(e).

4. Procédé selon l'une des revendications précédentes, avec l'étape a1) visant à recueillir des données concernant un état de conduite (v1) du véhicule automobile (10) et/ou un choc frontal du véhicule automobile (10) avec un objet (12) au moyen d'un capteur d'état de conduite (32, 34) ou un capteur de collision (30) ; et
dans lequel l'étape d'évaluation comprend :
l'évaluation du choc frontal du véhicule automobile (10) avec l'objet (12) sur la base des données recueillies par le au moins un capteur ambiant (20a, 20b) et le capteur d'état de conduite (32, 34), éventuellement l'au moins un capteur ambiant (20a, 20b) et le capteur de collision (30) par sélection d'une évaluation (BW1, BW2, BW3, BW4) parmi les au moins deux évaluations déterminables (BW1, BW2, BW3, BW4).

5. Procédé selon l'une des revendications précédentes,
**caractérisé en ce que**
l'étape de la commande de l'alimentation électrique est déclenchée avant le début du choc frontal du véhicule automobile (10) avec l'objet (12).

6. Procédé selon la revendication 4,
**caractérisé en ce que**
l'étape de la commande de l'alimentation électrique est bloquée avant le début du choc frontal du véhicule automobile (10) avec l'objet (12).

7. Dispositif de commande de l'alimentation électrique par un dispositif de fourniture de courant (14, 16, 24) dans un réseau électrique (28) d'un véhicule automobile (10) comprenant des moyens pour réaliser les étapes du procédé selon l'une des revendications 1 à 6, avec
- au moins un capteur ambiant (20a, 20b) qui est formé de manière à recueillir des données concernant le champ ambiant du véhicule automobile (10) ;
- un dispositif d'évaluation (18) qui est conçu de manière à évaluer un choc frontal potentiel du véhicule automobile (10) avec un objet (12) dans le champ ambiant du véhicule automobile (10) sur la base des données recueillies par l'au moins un capteur ambiant (20a, 20b) par sélection d'une évaluation (BW1, BW2, BW3, BW4) parmi au moins deux évaluations déterminables (BW1, BW2, BW3, BW4), dans lequel les au moins deux évaluations déterminables (BW1, BW2, BW3, BW4) caractérisent un choc frontal du véhicule automobile (10) avec un objet (12) quant à l'influence du choc frontal sur le dispositif de fourniture de courant (14, 16, 24) ; et
- un dispositif de commande (18) qui est conçu pour commander en fonction de l'évaluation choisie (BW1, BW2, BW3, BW4) l'alimentation électrique dans le réseau électrique (28) du véhicule automobile (10) selon une prévision de commande déterminable (SV1, SV2, SV3, SV4), dans lequel une prévision de commande spécifique (SV1, SV2, SV3, SV4) est affectée à chacune des au moins deux évaluations déterminables (BW1, BW2, BW3, BW4) ;
**caractérisé en ce que** l'au moins un capteur ambiant (20a, 20b) peut fournir des informations de mouvement, de position et de type d'autres usagers de la voie publique, les au moins deux évaluations déterminables (BW1, BW2, BW3, BW4) caractérisent le choc frontal du véhicule automobile (10) avec l'objet (12) en ce qui concerne l'influence du choc frontal sur le dispositif de fourniture de courant (14, 16, 24), le dispositif de commande (18) est conçu de manière à permettre une adaptation de la commande de l'alimentation électrique à la gravité d'un accident, pour sélectionner une première évaluation (BW2) au cas où le choc frontal est évalué comme non critique quant à l'influence du choc frontal sur le dispositif de fourniture de courant (14, 16, 24) en raison d'une collision légère par l'arrière entre le véhicule automobile (10) et l'objet (12), dans lequel la première évaluation (BW2) est affectée à une première des prévisions de commande (SV2) pour choisir une deuxième évaluation (BW2) au cas où le choc frontal est considéré comme très critique quant à l'influence du choc frontal sur le dispositif de fourniture de courant (14, 16, 24) en raison d'un accident grave entre le véhicule automobile (10) et l'objet (12), dans lequel la deuxième évaluation (BW3) est affectée à une deuxième des prévisions de commande (SV3), la première des prévisions de commande (SV2) prévoit qu'il se produise une rupture réversible de l'alimentation électrique, et la seconde des prévisions de commande (SV3) prévoit qu'il se produise une rupture irréversible de l'alimentation électrique dans le cadre de la commande du véhicule automobile, dans lequel, pour la rupture réversible, des contacteurs internes présents dans un dispositif de fourniture de courant (14, 16, 24) sont ouverts de manière réversible de sorte qu'aucun courant ne soit fourni par le dispositif de fourniture de courant (14, 16, 24) vers l'extérieur, et la rupture irréversible est réalisée par une séparation pyrotechnique d'une conduite électrique de sorte qu'aucun courant ne soit fourni par le dispositif de fourniture de courant (14, 16, 24) vers l'extérieur, et le dispositif de commande (18) est conçu de manière à évaluer par les au moins deux évaluations déterminables (BW1, BW2, BW3, BW4) une probabilité, un déroulement et une gravité du choc frontal potentiel du véhicule automobile (10) avec l'objet (12) et une zone de collision entre le véhicule automobile (10) et l'objet (12) ainsi qu'un angle de collision entre le véhicule automobile (10) et l'objet (12) et une vitesse relative (v2-v1) entre le véhicule automobile (10) et l'objet (12) ainsi qu'un moment d'impact prévisible de l'objet (12) sur le véhicule automobile (10) et une déformation potentielle du véhicule automobile (10) et les charges à escompter sur les composants électriques, dans lequel, lors d'une rupture réversible de l'alimentation électrique, le dispositif de gestion (22) du dispositif de fourniture de courant (14, 16, 24) permet à un conducteur du véhicule automobile de refermer les contacteurs internes et d'activer automatiquement le dispositif de fourniture de courant (14, 16, 24) et lors d'une rupture irréversible de l'alimentation électrique, le dispositif de gestion (22) du dispositif de fourniture de courant (14, 16, 24) garantit que, par introduction d'un code, seul le personnel spécialisé puisse refaire passer le dispositif de fourniture de courant (14, 16, 24) dans un état actif.

8. Véhicule automobile (10) ayant un dispositif selon la revendication 7 et un réseau électrique (28).

9. Véhicule automobile selon la revendication 8,
**caractérisé en ce que**
le réseau électrique (28) comprend le dispositif de fourniture de courant (14, 16, 24), en particulier la batterie de traction (14).
